(19) **Europäisches Patentamt**
**European Patent Office**
**Office européen des brevets**

(11) **EP 3 996 087 A1**

(12) # EUROPEAN PATENT APPLICATION
published in accordance with Art. 153(4) EPC

(43) Date of publication:
**11.05.2022 Bulletin 2022/19**

(21) Application number: **21827558.4**

(22) Date of filing: **08.09.2021**

(51) International Patent Classification (IPC):
$G10L\ 17/00^{(2013.01)}$       $G10L\ 25/03^{(2013.01)}$
$G10L\ 25/51^{(2013.01)}$

(86) International application number:
**PCT/CN2021/117321**

(87) International publication number:
**WO 2022/052965 (17.03.2022 Gazette 2022/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.09.2020   CN 202010949579**

(71) Applicant: **CloudMinds Robotics Co., Ltd.
Shanghai 201111 (CN)**

(72) Inventor: **LI, Rui
Shanghai 201111 (CN)**

(74) Representative: **Lenzing Gerber Stute
PartG von Patentanwälten m.b.B.
Bahnstraße 9
40212 Düsseldorf (DE)**

(54) **VOICE REPLAY ATTACK DETECTION METHOD, APPARATUS, MEDIUM, DEVICE AND PROGRAM PRODUCT**

(57)     The present disclosure relates to a voice replay attack detection method, an apparatus, a medium, a device and a program product. The method comprises: acquiring a multichannel voice signal collected by a microphone array; extracting a non-voice signal in the multichannel voice signal, to obtain a multichannel signal without a voice signal; determining, for N other channel signals except a first channel signal in the multichannel signal, a relative delay spectrum between the other channel signals and the first channel signal, wherein the first channel signal is any channel signal in the multichannel signal, and N is a positive integer greater than or equal to 1; and identifying, according to the relative delay spectrum, whether a collected voice signal is a replay attack or not. By adopting the present disclosure, whether the collected voice signal is a real voice or a replay attack can be accurately identified, to ensure the security of a voice interaction system.

Acquire a multichannel voice signal collected by a microphone array — S101

Extract a non-voice signal in the multichannel voice signal, to obtain a multichannel signal without a voice signal — S102

For N other channel signals except a first channel signal in the multichannel signal, determine a relative delay spectrum between the other channel signals and the first channel signal — S103

According to the relative delay spectrum, identify whether a collected voice signal is a replay attack or not — S104

FIG. 1

EP 3 996 087 A1

**Description**

CROSS-REFERENCE TO RELATED APPLICATIONS

The present disclosure claims the priority of a Chinese patent application entitled "voice replay attack detection method, apparatus, readable storage medium and electronic device" submitted to the China Patent Office on September 10, 2020, with application No. 202010949579.1, and the entire content of which is incorporated in the present disclosure by reference.

TECHNICAL FIELD

The present disclosure relates to the field of voice interaction security, and particularly to a voice replay attack detection method, an apparatus, a medium, a device and a program product.

BACKGROUND

With widespread use of smart devices that use voice as information interaction, human voiceprint characteristics gradually become important identity authentication information. Like other authentication information, voiceprints may be inevitably stolen or counterfeited by criminals. In absence of precautions, a criminal can easily pass an authentication system with a piece of voice recorded secretly.

To improve the security of voice interaction, live detection on acquired voice information is necessary. However, in a conventional voice replay attack detection method, a single-mic signal is chiefly used, and distinguishing is performed by using a template method and a machine learning method. Since a secretly recorded voice signal self has a high degree of similarity to a voice signal of a user, this method is not high in detection rate.

Therefore, how to identify whether a collected voice is a real voice or a replayed voice has become a problem that needs to be solved in the field of voice interaction.

SUMMARY

The object of the present disclosure is to provide a voice replay attack detection method, an apparatus, a medium, a device and a program product, to solve problems of relevant technologies.

To achieve the object, in a first aspect, the present disclosure provides a voice replay attack detection method, including:

acquiring a multichannel voice signal collected by a microphone array;
extracting a non-voice signal in the multichannel voice signal, to obtain a multichannel signal without a voice signal;
determining, for N other channel signals except a first channel signal in the multichannel signal, a relative delay spectrum between the other channel signals and the first channel signal, wherein the first channel signal is any channel signal in the multichannel signal, and N is a positive integer greater than or equal to 1; and
identifying, according to the relative delay spectrum, whether a collected voice signal is a replay attack or not.

Optionally, extracting the non-voice signal in the multichannel voice signal, to obtain the multichannel signal without the voice signal, includes:

performing voice activation detection on a second channel voice signal, to detect a voice signal and a non-voice signal in the second channel voice signal, wherein a second channel signal is any channel voice signal in the multichannel voice signal; and
extracting the non-voice signal from the second channel voice signal; and extracting, according to a time period of the detected non-voice signal in the second channel voice signal, a signal part belonging to the time period from other channel voice signals rather than the second channel voice signal respectively, as the non-voice signal in the other channel voice signals.

Optionally, identifying, according to the relative delay spectrum, whether the collected voice signal is the replay attack or not, includes:

while N=1, determining the maximum peak in the relative delay spectrum; and
while the maximum peak is greater than or equal to a preset threshold, identifying that the collected voice signal is the replay attack.

Optionally, identifying, according to the relative delay spectrum, whether the collected voice signal is the replay attack or not, includes:

while N>1, determining the maximum peak in each relative delay spectrum respectively, to obtain N maximum peaks; and
identifying, according to the N maximum peaks and the preset threshold, whether the collected voice signal is the replay attack or not.

Optionally, identifying, according to the N maximum peaks and the preset threshold, whether the collected voice signal is the replay attack or not, includes one of the following:

while the average value of the N maximum peaks is greater than or equal to the preset threshold, identifying that the collected voice signal is the replay attack;
while the maximum value of the N maximum peaks is greater than or equal to the preset threshold, identifying that the collected voice signal is the replay attack; and
while the number of maximum peaks greater than or equal to the preset threshold in the N maximum peaks meets a preset number, identifying that the collected voice signal is the replay attack.

In a second aspect, the present disclosure provides a voice replay attack detection apparatus, the apparatus including:

an acquisition module, configured to acquire a multichannel voice signal collected by a microphone array;
an extraction module, configured to extract a non-voice signal in the multichannel voice signal, to obtain a multichannel signal without a voice signal;
a determination module, configured to determine, for N other channel signals except a first channel signal in the multichannel signal, a relative delay spectrum between the other channel signals and the first channel signal, wherein the first channel signal is any channel signal in the multichannel signal, and N is a positive integer greater than or equal to 1; and
an identification module, configured to identify, according to the relative delay spectrum, whether a collected voice signal is a replay attack or not.

Optionally, the extraction module includes:

a voice activation detection submodule, configured to perform voice activation detection on a second channel voice signal, to detect a voice signal and a non-voice signal in the second channel voice signal, wherein a second channel signal is any channel voice signal in the multichannel voice signal;
a first extraction submodule, configured to extract the non-voice signal from the second channel voice signal; and
a second extraction submodule, configured to extract, according to the time period of the detected non-voice signal in the second channel voice signal, a signal part belonging to a time period from other channel voice signals rather than the second channel voice signal respectively, as the non-voice signal in the other channel voice signals.

Optionally, the identification module includes:

a first identification submodule, configured to determine, while N=1, the maximum peak in the relative delay spectrum, and configured to identify, while the maximum peak is greater than or equal to a preset threshold, that the collected voice signal is the replay attack; and
a second identification submodule, configured to determine, while N>1, the maximum peak in each relative delay spectrum, to obtain N maximum peaks, and configured to identify, according to the N maximum peaks and the preset threshold, whether the collected voice signal is the replay attack or not.

Optionally, the second identification submodule is configured to identify whether the collected voice signal is the replay attack in one of the following modes: while the average value of the N maximum peaks is greater than or equal to the preset threshold, identifying that the collected voice signal is the replay attack; while the maximum value of the N maximum peaks is greater than or equal to the preset threshold, identifying that the collected voice signal is the replay attack; and while the number of maximum peaks greater than or equal to the preset threshold in the N maximum peaks meets a preset number, identifying that the collected voice signal is the replay attack.

In a third aspect, the present disclosure provides a computer-readable storage medium on which a computer program is stored, and when the program is executed by a processor, steps of the method provided in the first aspect of the present disclosure are implemented.

In a fourth aspect, the present disclosure provides an electronic device which includes: a memory on which a computer program is stored, and a processor, configured to execute the computer program in the memory, to implement steps of the method provided in the first aspect of the present disclosure.

In a fifth aspect, the present disclosure provides a computer program product which includes a computer program that, when executed by a processor, implements steps of the method provided in the first aspect of the present disclosure.

The technical solution provided by embodiments of the present disclosure has beneficial effects that firstly, the multichannel voice signal collected by the microphone array is acquired, and the non-voice signal in the multichannel voice signal is extracted subsequently, to obtain the multichannel signal without the voice signal. Secondly, for N other channel signals except the first channel signal in the multichannel signal, the relative delay spectrum between other channel signals and the first channel signal is determined. Finally, according to the relative delay spectrum, whether the collected voice signal is the replay attack or not is identified. In the present disclosure, with research, the inventor finds that noises of voice signals played by a power amplifier device are in a high correlation, so a strong peak is formed in a relative delay spectrum of the voice signals. Therefore, by analyzing the relative delay spectrum of the multichannel signal, whether the collected voice signal is the replay attack or not can be accurately identified. By adopting the voice replay attack detection method provided by the present disclosure, replay audio signals of various power amplifier devices can be effectively detected, with good and stable detection performance. In addition, by adopting the method, the security risk of a voice interaction system with voice information as identity authentication can be greatly reduced, and the security of voice interaction can be improved.

Other characteristics and advantages of the present disclosure are described in detail in the subsequent specific embodiments.

BRIEF DESCRIPTION OF DRAWINGS

Drawings are used to provide a further understanding of the present disclosure and constitute a part of the specification. Together with the following specific embodiments, the drawings are used to explain the present disclosure, but not to limit the present disclosure. In drawings:

FIG. 1 shows a flow chart of a voice replay attack detection method illustrated according to an embodiment;
FIG. 2 shows a schematic diagram of a relative delay spectrum corresponding to voice and non-voice parts in a real voice illustrated according to an embodiment;
FIG. 3 shows a schematic diagram of a relative delay spectrum corresponding to voice and non-voice parts in a replay attack illustrated according to an embodiment;
FIG. 4 shows a flow chart of a voice replay attack detection method illustrated according to another embodiment;
FIG. 5 shows a flow chart of a voice replay attack detection method illustrated according to another embodiment;
FIG. 6 shows a flow chart of a voice replay attack detection apparatus illustrated according to an embodiment;
FIG. 7 shows a block diagram of an electronic device illustrated according to an embodiment; and
FIG. 8 shows a block diagram of an electronic device illustrated according to another embodiment.

DETAILED DESCRIPTION OF THE EMBODIMENTS

Specific embodiments of the present disclosure are described in detail in combination with drawings below. It should be understood that the specific embodiments described here are only used to illustrate and explain the present disclosure, but not to limit the present disclosure.

In the field of voice interaction technologies, a replay attack refers to behaviors that the voice of a target user is secretly recorded by using a recording device, and then replayed to impersonate the target user to pass system authentication, resulting in problems such as user information disclosure and property loss. The replay attack is an attack method easy to implement and low in cost, and is very easy to be used by criminals.

In a relevant detection technology, time-frequency characteristics of voice signals are distinguished mainly by using a template method and a machine learning method. The template method is to first perform template training on a voice signal to obtain a template library, subsequently process voice signals to be identified in same rules, and compare with data in the template library to identify whether a voice to be identified is a real voice or a replay attack. The machine learning method is to train a voice detection model based on known true and false voice data, and then input a voice signal to be identified into the model to be classified and distinguished, to identify whether a voice to be identified is a real voice or a replay attack.

Since a secretly recorded voice signal self has a high degree of similarity to a voice signal of a user, a detection method in a relevant technology is not high in detection rate. If a secretly recorded voice is played by using a high-fidelity power amplifier device, the template method may not be able to distinguish the true and false of a collected signal. The machine learning method, which is affected by the distribution of learning data, is low in detection robustness, and signals outside the distribution of training data are hard to be effectively detected. For example, a model trained by using a voice played by a mobile phone may not have the ability to authenticate a voice played by a portable notebook computer. In other words, detection methods based on template methods and machine learning are often closely related to replay devices of fake voices, and are low in detection rate and poor in universality.

In view of this, the present disclosure provides a voice replay attack detection method. Based on a characteristic that the noise in a replayed voice has spatial directionality, a replayed voice is identified.

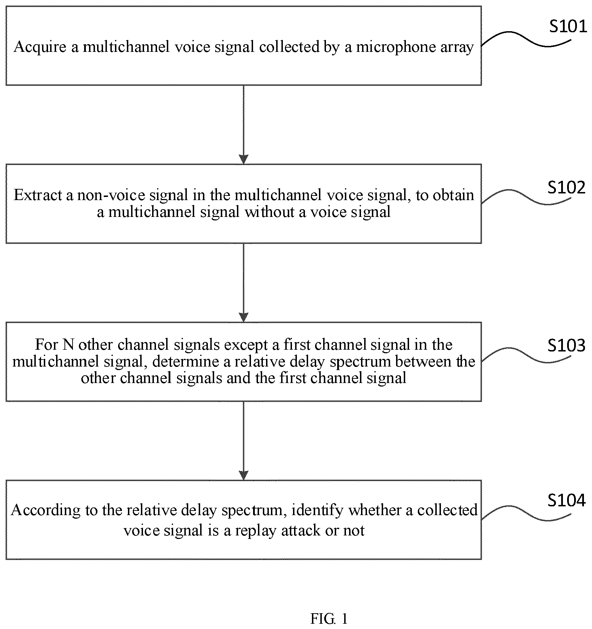

FIG. 1 shows a flow chart of a voice replay attack detection method illustrated according to an embodiment. The method can be for example applied to electronic devices such as smart robots and smart speakers. As shown in FIG. 1, the method includes S101 to S104.

In S101, a multichannel voice signal collected by a microphone array is acquired.

In the embodiment, the multichannel voice signal can be collected by an M-element microphone array (M≥2). The microphone array can be an apparatus of any form with a voice collection capability, and the microphone array can be arranged on terminal devices such as smart robots, or arranged as an independent apparatus. The arrangement structure of the microphone array may be a linear structure or a ring structure, which is not limited in the present disclosure.

In S102, a non-voice signal in the multichannel voice signal is extracted, to obtain a multichannel signal without a voice signal.

Exemplarily, in the M-element microphone array, the expression of a voice signal actually received in an ith channel is:

$$M_i(t, f) = H_i(f)S(t, f) + N_i(t, f)$$

The expression of a voice signal actually received in a jth channel is:

$$M_j(t, f) = H_j(f)S(t, f) + N_j(t, f)$$

Where $M_i(t, f)$ represents the voice signal actually received in the ith channel, $M_j(t, f)$ represents the voice signal actually received in the jth channel, $S(t, f)$ represents a sound source signal, $H_i(f)$ and $H_j(f)$ respectively present transfer functions of respective routes of the ith channel and the jth channel, $N_i(t, f)$ and $N_j(t, f)$ respectively represent the background noise of the voice signal actually received in the ith channel and the background noise of the voice signal actually received in the jth channel.

In a non-voice signal segment, that is, $S=0$, the expression of the voice signal actually received in the ith channel is:

$$M_i(t, f) = N_i(t, f)$$

The expression of a voice signal actually received in a jth channel is:

$$M_j(t, f) = N_j(t, f)$$

In a voice signal segment, since voice signals received by each element in the microphone array comes from a same sound source, the voice signals of each channel are in a high correlation.

In case of a real voice, in the non-voice signal segment, since the background noise is generally scattered and non-directional, non-voice signals of each channel are not in a correlation, or are in a weak correlation.

In case that the voice signal of the replay attack is extremely similar to a real voice signal of the user, the voice signals are in the high correlation, therefore, the replay attack is hard to identify through a voice part.

For the replayed voice, a single-mic signal recorded by the recording device is defined as:

$$M_p(t, f) = H_p(f)S(t, f) + N_p(t, f)$$

Where $M_p(t, f)$ represents a voice signal actually received by the recording device, $H_p(f)$ represents a transfer function of the recording device in a route thereof, and $N_p(i, f)$ represents the background noise in the voice signal actually received by the recording device.

The signal is replayed, and in the M-element microphone array, the expression of the voice signal actually received in the ith channel is:

$$M_i(t, f) = H_i^{'}(f)(M_p(t, f) + N_s(t, f)) + N_i(t, f)$$

The expression of a voice signal actually received in a jth channel is:

$$M_j(t, f) = H_j^{'}(f)(M_p(t, f) + N_s(t, f)) + N_j(t, f)$$

Where $N_s(t, f)$ represents a noise caused by a power amplifier device, such as an electromagnetic noise, $H_i^{'}(f)$, $H_j^{'}(f)$ respectively represent transfer functions of respective routes of the ith channel and the jth channel.

In a non-voice signal segment of the replayed voice, that is, $S=0$, the expression of the voice signal actually received in the ith channel is:

$$M_i(t, f) = H_i^{'}(f)(N_p(t, f) + N_s(t, f)) + N_i(t, f)$$

The expression of the voice signal actually received in the jth channel is:

$$M_j(t, f) = H_j^{'}(f)(N_p(t, f) + N_s(t, f)) + N_j(t, f)$$

Since the background noise of the single-mic signal is random and non-directional when recorded by the recording device, the non-voice signal of each channel is not in correlation at the moment, but when the voice is replayed by the power amplifier device, the power amplifier device becomes a point sound source. When there is no voice signal, $N_p(t, f)$ and $N_s(t, f)$ have spatial directionality. Although there is no voice signal, $N_p(t, f)$ and $N_s(t, f)$ are still in the high correlation between two channels, so voice replay attack detection can be performed with the spatial characteristic of a replay noise in a non-voice time period.

In a possible implementation mode, voice activation detection is performed on acquired multichannel voice signals one by one, and non-voice signals in the multichannel voice signals are respectively extracted, to obtain the multichannel signal without the voice signal.

In S103, for N other channel signals except the first channel signal in the multichannel signal, the relative delay spectrum between other channel signals and the first channel signal is determined.

The first channel signal is any channel signal in the multichannel signal, and N is a positive integer greater than or equal to 1.

In the step, a channel signal can be firstly appointed in the multichannel signal, as the first channel signal, or a channel signal of the multichannel signal is preset as the first channel signal, which is not limited in the present disclosure. The first channel signal can be used as a reference channel signal. Subsequently, for N other channel signals except the first channel signal, relative delay spectrum between other channel signals and the first channel signal are calculated one by one. Exemplarily, if N=1, relative delay spectrum between the other channel signal and the first channel signal is calculated; and if N>1, a relative delay spectrum between each other channel signal in the N other channel signals and the first channel signal is calculated. In the present disclosure, the relative delay spectrum can be for example calculated through cross-correlation algorithms. Exemplarily, the cross-correlation algorithms include, but not limited to: Generialized Cross-Correlation (GCC), Generialized Cross-Correlation-Phase Transform (GCC-PATH), Generialized Cross-Correlation-Roth (GCC-Roth), Generialized Cross-Correlation-Smooth to correlation transform (GCC-SCOT), Generialized Cross-Correlation- Eckart (GCC-Eckart), Crosspower spectrum phase (CSP), and the like.

In S104, according to the relative delay spectrum, whether a collected voice signal is a replay attack or not is identified.

As described above, when the voice is replayed by the power amplifier device, the power amplifier device becomes the point sound source. The replay noise has spatial directionality in the non-voice time period, and a strong peak is formed in the relative delay spectrum thereof. Therefore, in one possible implementation mode, by determining whether the strong peak is formed in the relative delay spectrum, whether the collected voice is the replay attack is identified. While determining that the strong peak is formed in the relative delay spectrum, that the required voice signal is the replay attack is identified.

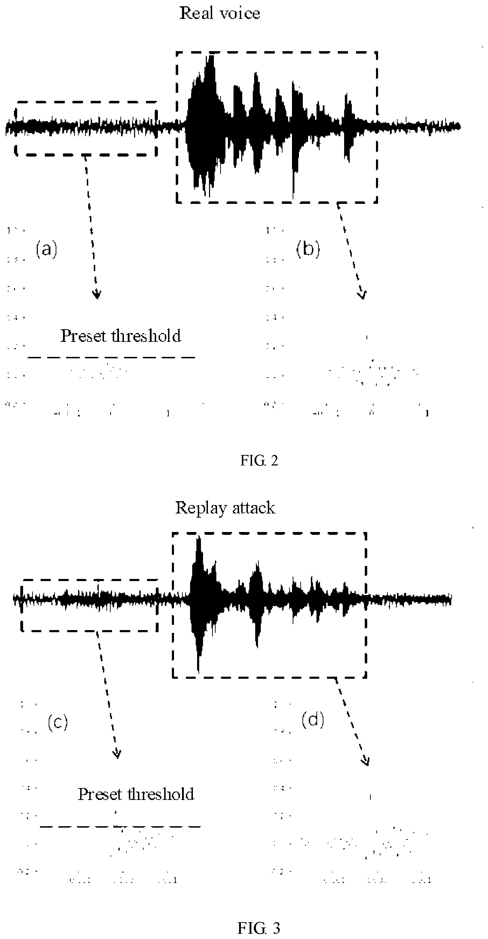

FIG. 2 shows a schematic diagram of a relative delay spectrum corresponding to voice and non-voice parts in a real voice illustrated according to an embodiment; and FIG. 3 shows a schematic diagram of a relative delay spectrum corresponding to voice and non-voice parts in a replay attack illustrated according to an embodiment.

In a voice signal segment, referring to the relative delay spectrum shown in FIG. 2 (b) and the relative delay spectrum shown in FIG. 3 (d), since voice signals are in a high correlation, a strong peak is formed in a relative delay spectrum of two channel voice signal segments.

In a non-voice signal segment, referring to the relative delay spectrum of the real voice shown in FIG. 2 (a), since background noises of real voice are in a weak correlation, a strong peak is not formed in a relative delay spectrum of two channel non-voice signal segments.

In a non-voice signal segment of a replayed voice, referring to the relative delay spectrum of the replay attack shown in FIG. 3 (c), since $N_p(t, f)$ and $N_s(t, f)$ are in a high correlation, a strong peak is formed in a relative delay spectrum of two channel non-voice signal segments.

Therefore, by determining whether the strong peak is formed in the relative delay spectrum or not, whether the collected voice is the replay attack or not is accurately identified.

The technical solution provided by embodiments of the present disclosure has beneficial effects that firstly, the multichannel voice signal collected by the microphone array is acquired, and the non-voice signal in the multichannel voice signal is extracted subsequently, to obtain the multichannel signal without the voice signal. Secondly, for N other channel signals except the first channel signal in the multichannel signal, the relative delay spectrum between other channel signals and the first channel signal is determined. Finally, according to the relative delay spectrum, whether the collected voice signal is the replay attack or not is identified. In the present disclosure, with research, the inventor finds that noises of voice signals played by a power amplifier device are in a high correlation, so a strong peak is formed in a relative delay spectrum of the voice signals. Therefore, by analyzing the relative delay spectrum of the multichannel signal, whether the collected voice signal is the replay attack or not can be accurately identified. By adopting the voice replay attack detection method provided by the present disclosure, replay audio signals of various power amplifier devices can be effectively detected, with good and stable detection performance. In addition, by adopting the method, the security risk of a voice interaction system with voice information as identity authentication can be greatly reduced, and the security of voice interaction can be improved.

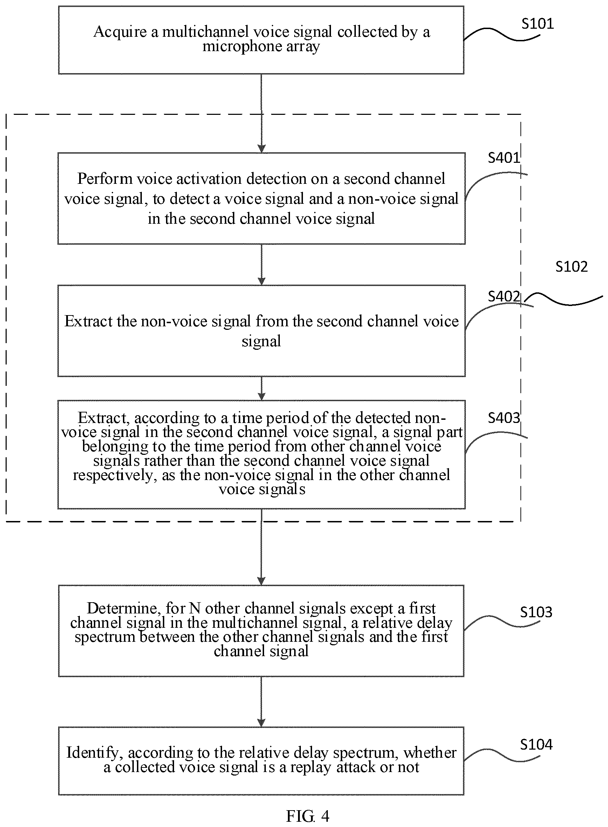

FIG. 4 shows a flow chart of a voice replay attack detection method illustrated according to another embodiment. As shown in FIG. 4, in another possible implementation mode of the present disclosure, S102 may further include:

in S401, performing voice activation detection on a second channel voice signal, to detect a voice signal and a non-voice signal in the second channel voice signal, wherein a second channel signal is any channel voice signal in the multichannel voice signal;

in S402, extracting the non-voice signal from the second channel voice signal; and

in S403, according to a time period of the detected non-voice signal in the second channel voice signal, extracting a signal part belonging to the time period from other channel voice signals rather than the second channel voice signal respectively, as the non-voice signal in the other channel voice signals.

Exemplarily, in the M-element microphone array, while M=2, voice activation detection is performed on a voice signal of one of two channels, to obtain a time period of a non-voice signal of the channel, for example, when the time period is T1-T2, a signal part in the time period T1-T2 is extracted from the voice signal of the channel, as a non-voice signal in the channel voice signal. Subsequently, according to the time period T1-T2, a signal part belonging to the time period T1-T2 in a voice signal of the other channel is extracted, and the extracted signal part is used as a non-voice signal in the other channel voice signal.

Exemplarily, in the M-element microphone array, while M=6, voice activation detection is performed on a voice signal of one of six channels, to obtain a time period of a non-voice signal of the channel, for example, when the time period is T1-T2, a signal part in the time period T1-T2 is extracted from the voice signal of the channel, as a non-voice signal in the channel voice signal. Subsequently, according to the time period T1-T2, a signal part belonging to the time period T1-T2 in a voice signal of the other five channels is extracted, and the extracted signal part is used as a non-voice signal in a corresponding channel voice signal.

According to the technical solution, it is not necessary to perform voice activation detection on each channel voice signal, but only on one of the channel voice signals, and thus the complexity of the detection method is greatly reduced. Since the voice signal segment and the non-voice signal segment in the multichannel voice signal have a high degree of similarity, after the voice activation detection is performed on one channel voice signal and non-voice signal time period information is obtained, the time period information is directly used, and other channel voice signals are only subjected to signal extraction in a time dimension, thereby ensuring the accuracy of voice activation detection and greatly improving the detection efficiency.

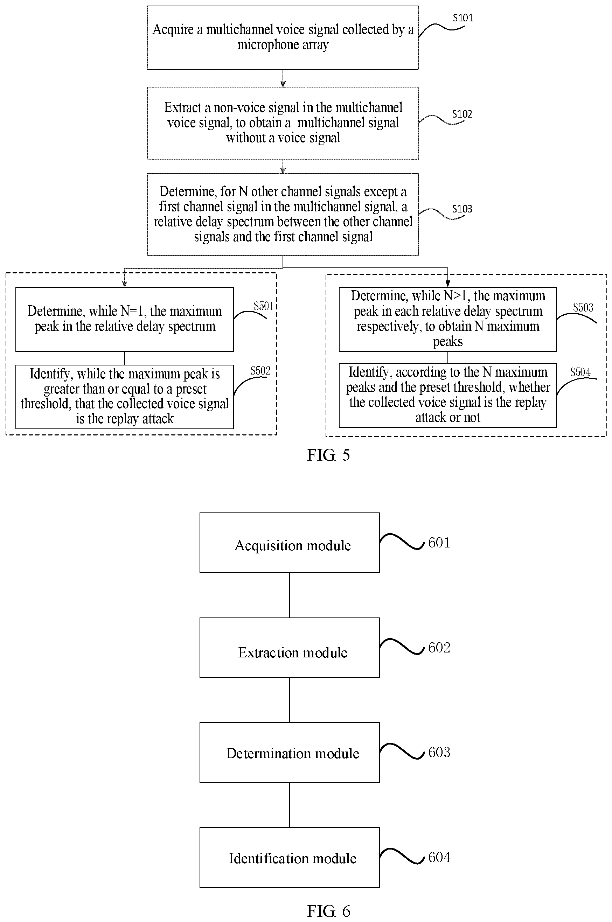

FIG. 5 shows a flow chart of a voice replay attack detection method illustrated according to another embodiment; As shown in FIG. 5, in another possible implementation mode of the present disclosure, S104 may further include:

in S501, while N=1, determining the maximum peak in the relative delay spectrum; and
in S502, while the maximum peak is greater than or equal to a preset threshold, identifying that the collected voice signal is the replay attack.

Exemplarily, while N=1, voice signals of two channels in the microphone array are acquired, S102 and S103 are performed, to obtain the relative delay spectrum of the two voice channels, subsequently, the maximum peak of the relative delay spectrum is determined, and recorded as P, and if the maximum peak P in the relative delay spectrum is greater than or equal to a preset threshold $\delta$, that the collected voice signal is the replay attack is identified.

In addition, as shown in FIG. 5, S104 may further include:

in S503, while N>1, determining the maximum peak in each relative delay spectrum respectively, to obtain N maximum peaks; and
in S504, according to the N maximum peaks and the preset threshold, identifying whether the collected voice signal is the replay attack or not.

Exemplarily, while N=5, voice signals of six channels in the microphone array are acquired, S102 and S103 are performed, to obtain five relative delay spectra, and subsequently, maximum peaks of all relative delay spectra are determined one by one, and recorded as P12, P13, P14, P15 and P16. Subsequently, according to the five maximum peaks and the preset threshold, whether the collected voice signal is the replay attack or not is identified.

Specifically, S504 may further include one of the following:

while the average value of the N maximum peaks is greater than or equal to the preset threshold, identifying that the collected voice signal is the replay attack;
while the maximum value of the N maximum peaks is greater than or equal to the preset threshold, identifying that the collected voice signal is the replay attack; and
while the number of maximum peaks greater than or equal to the preset threshold in the N maximum peaks meets a preset number, identifying that the collected voice signal is the replay attack.

The preset threshold may be a preset threshold value, which is related to an actual microphone array.

In one possible implementation mode, the examples are followed, and the average value of the five maximum peaks P12, P13, P14, P15 and P16 is calculated, and recorded as P. While the average value P is greater than or equal to the preset threshold $\delta$, it is identified that the collected voice signal is the replay attack.

In another possible implementation mode, the maximum value of the five maximum peaks P12, P13, P14, P15 and P16 is used, and recorded as P. While the maximum value P is greater than or equal to the preset threshold $\delta$, it is identified that the collected voice signal is the replay attack.

In a third possible implementation mode, the number of maximum peaks meeting the preset threshold $\delta$ in the five maximum peaks P12, P13, P14, P15 and P16 (that is, greater than or equal to the preset threshold $\delta$) is calculated, and recorded as B, and while the number B meets a preset number (that is, greater than or equal to the preset number), it is identified that the collected voice signal is the replay attack.

According to the technical solution, when the voice signals are played by the power amplifier device, noises thereof are in the high correlation, so the strong peak is formed in the relative delay spectrum. Therefore, by analyzing the relative delay spectrum of the multichannel signal, whether the collected voice signal is the replay attack or not can be accurately identified. By comparing the maximum peak of the relative delay spectrum with the preset threshold, the relationship between a peak value and the preset threshold can be clearly identified from the relative delay spectrum, then whether the strong peak is formed in the relative delay spectrum can be accurately identified, and furthermore, the real voice and the replay attack can be efficiently and rapidly identified.

FIG. 6 shows a block diagram of a voice replay attack detection apparatus illustrated according to an embodiment. As shown in FIG. 6, the apparatus may include an acquisition module 601, an extraction module 602, a determination module 603 and an identification module 604.

The acquisition module 601 is configured to acquire a multichannel voice signal collected by a microphone array.

The extraction module 602 is configured to extract a non-voice signal in the multichannel voice signal, to obtain a multichannel signal without a voice signal.

The determination module 603 is configured to determine, for N other channel signals except the first channel signal in the multichannel signal, a relative delay spectrum between other channel signals and a first channel signal, wherein the first channel signal is any channel signal in the multichannel signal, and N is a positive integer greater than or equal to 1.

The identification module 604 is configured to identify, according to the relative delay spectrum, whether a collected voice signal is a replay attack or not.

By adopting the technical solution, firstly, the multichannel voice signal collected by the microphone array is acquired, and the non-voice signal in the multichannel voice signal is extracted subsequently, to obtain the multichannel signal without the voice signal. Secondly, for N other channel signals except the first channel signal in the multichannel signal, the relative delay spectrum between other channel signals and the first channel signal is determined. Finally, according to the relative delay spectrum, whether the collected voice signal is the replay attack or not is identified. In the present disclosure, with research, the inventor finds that noises of voice signals played by a power amplifier device are in a high correlation, so a strong peak is formed in a relative delay spectrum of the voice signals. Therefore, by analyzing the relative delay spectrum of the multichannel signal, whether the collected voice signal is the replay attack or not can be accurately identified. By adopting the voice replay attack detection method provided by the present disclosure, replay audio signals of various power amplifier devices can be effectively detected, with good and stable detection performance. In addition, by adopting the method, the security risk of a voice interaction system with voice information as identity authentication can be greatly reduced, and the security of voice interaction can be improved.

Optionally, the extraction module 602 may include: a voice activation detection submodule, configured to perform voice activation detection on a second channel voice signal, to detect a voice signal and a non-voice signal in the second channel voice signal, wherein a second channel signal is any channel voice signal in the multichannel voice signal; a first extraction submodule, configured to extract the non-voice signal from the second channel voice signal; and a second extraction submodule, configured to extract, according to the time period of the detected non-voice signal in the second channel voice signal, a signal part belonging to a time period from other channel voice signals rather than the second channel voice signal respectively, as the non-voice signal in the other channel voice signals.

Optionally, the identification module 604 may include: a first identification submodule, configured to determine, while N=1, the maximum peak in the relative delay spectrum, and configured to identify, while the maximum peak is greater than or equal to a preset threshold, that the collected voice signal is the replay attack; and a second identification submodule, configured to determine, while N>1, the maximum peak in each relative delay spectrum, to obtain N maximum peaks, and configured to identify, according to the N maximum peaks and the preset threshold, whether the collected voice signal is the replay attack or not.

Optionally, the second identification submodule is configured to identify whether the collected voice signal is the replay attack in one of the following modes: while the average value of the N maximum peaks is greater than or equal to the preset threshold, identifying that the collected voice signal is the replay attack; while the maximum value of the N maximum peaks is greater than or equal to the preset threshold, identifying that the collected voice signal is the replay attack; and while the number of maximum peaks greater than or equal to the preset threshold in the N maximum peaks meets a preset number, identifying that the collected voice signal is the replay attack.

Regarding the apparatus in the embodiments, specific modes for the modules to execute operations are described in detail in embodiments of the method, and are not be elaborated here.

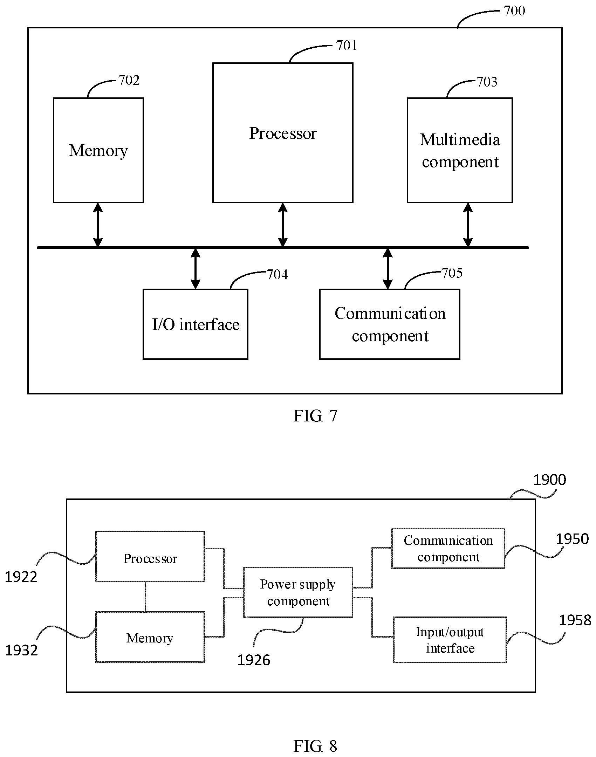

FIG. 7 shows a block diagram of an electronic device 700 illustrated according to an embodiment. As shown in FIG. 7, the electronic device 700 may include: a processor 701, and a memory 702. The electronic device 700 may further include one or more of a multimedia component 703, an input/output (I/O) interface 704, and a communication component 705.

The processor 701 is configured to control overall operations of the electronic device 700, to complete all or part of steps in the voice replay attack detection method. The memory 702 is configured to store various types of data to support operations on the electronic device 700. These data may include, for example, instructions for any application or method to operate on the electronic device 700, as well as application-related data, such as contact data, messages sent and received, figures, audios and videos. The memory 702 may be implemented by any type of volatile or non-volatile storage device or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, magnetic disk or optical disk. The multimedia component 703 may include a screen and an audio component. The screen may be for example a touch screen, and the audio component is configured to output and/or input audio signals. For example, the audio component may include a microphone, and the microphone is configured to receive external audio signals. The received audio signals may be further stored in the memory 702 or sent through the communication component 705. The audio component also includes at least one speaker, configured to output audio signals. The I/O interface 704 provides an interface between the processor 701 and other interface modules. The other interface modules may be keyboards, mice, buttons, and the like. These buttons may be virtual buttons or entity buttons. The communication component 705 is configured for wired or wireless communication between the electronic device 700 and other devices. Wireless communication, such as Wi-Fi, Bluetooth, Near Field Communication (NFC), 2G, 3G, 4G, NB-IOT, eMTC, or other 5G, etc., or a combination of one or more of them, which is not limited here. Therefore, the corresponding communication component 705 may include: a Wi-Fi module, a Bluetooth module, an NFC module, and the like.

In an exemplary embodiment, the electronic device 700 may be implemented by one or more of Application Specific Integrated Circuit, (ASIC), Digital Signal Processor (DSP), Digital Signal Processing Device (DSPD), Programmable Logic Device (PLD), Field Programmable Gate Array (FPGA), controller, microcontroller, microprocessor or other electronic components, and is configured to execute the voice replay attack detection method.

In another exemplary embodiment, the present disclosure also provides a computer-readable storage medium including program instructions that, when executed by a processor, implement steps of the voice replay attack detection method. For example, the computer-readable storage medium may be the memory 702 including program instructions which may be executed by the processor 701 of the electronic device 700 to complete the voice replay attack detection method.

FIG. 8 shows a block diagram of an electronic device 1900 illustrated according to an embodiment. For example, the electronic device 1900 may be provided as a server. Referring to FIG. 8, the electronic device 1900 includes a processor 1922, the number of which may be one or more, and a memory 1932, configured to store computer programs which may be executable by the processor 1922. The computer program stored in the memory 1932 may include one or more than one modules each corresponding to a set of instructions. In addition, the processor 1922 may be configured to execute the computer program, to implement the voice replay attack detection method.

In addition, the electronic device 1900 may further include a power supply component 1926 and a communication component 1950. The power supply component 1926 may be configured to perform power management of the electronic device 1900, and the communication component 1950 may be configured to implement communication of the electronic device 1900, for example, wired or wireless communication. In addition, the electronic device 1900 may further include an input/output (I/O) interface 1958. The electronic device 1900 can operate an operating system stored in the memory 1932, such as Windows Server™, Mac OSX™, Unix™, and Linux™.

In another exemplary embodiment, the present disclosure also provides a computer-readable storage medium including program instructions that, when executed by a processor, implement steps of the voice replay attack detection method. For example, the computer-readable storage medium may be the memory 1932 including program instructions which may be executed by the processor 1922 of the electronic device 1900 to complete the voice replay attack detection method.

In another exemplary embodiment, the present disclosure also provides a computer program product. The computer program product includes a computer program that can be executed by a programmable device. The computer program has a code part for implementing the voice replay attack detection method when executed by the programmable device.

The preferred embodiments of the present disclosure are described in detail above with reference to the drawings. However, the present disclosure is not limited to the specific details in the embodiments. Within the scope of the technical concept of the present disclosure, various simple modifications can be made to the technical solutions of the present disclosure, and these simple modifications all belong to the protection scope of the present disclosure.

In addition, it should be noted that various specific technical features described in the specific embodiments can be combined in any suitable manner without contradiction. To avoid unnecessary repetition, various possible combinations are not described separately in the present disclosure.

In addition, various different embodiments of the present disclosure can also be combined arbitrarily, as long as they do not violate the idea of the present disclosure, and should also be regarded as the content disclosed in the present disclosure.

Embodiment

1. A voice replay attack detection method, including:

acquiring a multichannel voice signal collected by a microphone array;
extracting a non-voice signal in the multichannel voice signal, to obtain a multichannel signal without a voice signal;
determining, for N other channel signals except a first channel signal in the multichannel signal, a relative delay spectrum between the other channel signals and the first channel signal, wherein the first channel signal is any channel signal in the multichannel signal, and N is a positive integer greater than or equal to 1; and
identifying, according to the relative delay spectrum, whether a collected voice signal is a replay attack or not.

2. The method according to Embodiment 1, extracting the non-voice signal in the multichannel voice signal, to obtain the multichannel signal without the voice signal, includes:

> performing voice activation detection on a second channel voice signal, to detect a voice signal and a non-voice signal in the second channel voice signal, wherein a second channel signal is any channel voice signal in the multichannel voice signal; and
> extracting the non-voice signal from the second channel voice signal; and extracting, according to a time period of the detected non-voice signal in the second channel voice signal, a signal part belonging to the time period from other channel voice signals rather than the second channel voice signal respectively, as the non-voice signal in the other channel voice signals.

3. The method according to Embodiment 1 or Embodiment 2, according to the relative delay spectrum, identifying whether the collected voice signal is the replay attack or not, includes:

> while N=1, determining the maximum peak in the relative delay spectrum; and
> while the maximum peak is greater than or equal to a preset threshold, identifying that the collected voice signal is the replay attack.

4. The method according to any one of Embodiments 1-3, according to the relative delay spectrum, identifying whether the collected voice signal is the replay attack or not, includes:

> while N>1, determining the maximum peak in each relative delay spectrum respectively, to obtain N maximum peaks; and
> identifying, according to the N maximum peaks and the preset threshold, whether the collected voice signal is the replay attack or not.

5. The method according to Embodiment 4, according to the N maximum peaks and the preset threshold, identifying whether the collected voice signal is the replay attack or not, includes one of the following:

> while the average value of the N maximum peaks is greater than or equal to the preset threshold, identifying that the collected voice signal is the replay attack;
> while the maximum value of the N maximum peaks is greater than or equal to the preset threshold, identifying that the collected voice signal is the replay attack; and
> while the number of maximum peaks greater than or equal to the preset threshold in the N maximum peaks meets a preset number, identifying that the collected voice signal is the replay attack.

6. A voice replay attack detection apparatus, including:

> an acquisition module, configured to acquire a multichannel voice signal collected by a microphone array;
> an extraction module, configured to extract a non-voice signal in the multichannel voice signal, to obtain a multichannel signal without a voice signal;
> a determination module, configured to determine, for N other channel signals except a first channel signal in the multichannel signal, a relative delay spectrum between the other channel signals and the first channel signal, wherein the first channel signal is any channel signal in the multichannel signal, and N is a positive integer greater than or equal to 1; and
> an identification module, configured to identify, according to the relative delay spectrum, whether a collected voice signal is a replay attack or not.

7. The apparatus according to Embodiment 6, wherein the identification module includes:

> a first identification submodule, configured to determine, while N=1, the maximum peak in the relative delay spectrum, and configured to identify, while the maximum peak is greater than or equal to a preset threshold, that the collected voice signal is the replay attack; and
> a second identification submodule, configured to determine, while N>1, the maximum peak in each relative delay spectrum, to obtain N maximum peaks, and configured to identify, according to the N maximum peaks and the preset threshold, whether the collected voice signal is the replay attack or not.

8. The apparatus according to Embodiment 7, wherein the second identification submodule is configured for identifying whether the collected voice signal is the replay attack or not in one of the following modes:

while the average value of the N maximum peaks is greater than or equal to the preset threshold, identifying that the collected voice signal is the replay attack;
while the maximum value of the N maximum peaks is greater than or equal to the preset threshold, identifying that the collected voice signal is the replay attack; and
while the number of maximum peaks greater than or equal to the preset threshold in the N maximum peaks meets a preset number, identifying that the collected voice signal is the replay attack.

9. A computer-readable storage medium on which a computer program is stored, and when the program is executed by a processor, steps of the method in any one of Embodiments 1-5 are implemented.
10. An electronic device, including:

a memory, on which a computer program is stored; and
a processor, configured to execute the computer program in the memory, to implement steps of the method in any one of Embodiments 1-5.

11. A computer program product, including a computer program that, when executed by a processor, implements steps of the method in any one of Embodiments 1-5.

**Claims**

1. A voice replay attack detection method, comprising:

acquiring a multichannel voice signal collected by a microphone array;
extracting a non-voice signal in the multichannel voice signal, to obtain a multichannel signal without a voice signal;
determining, for N other channel signals except a first channel signal in the multichannel signal, a relative delay spectrum between the other channel signals and the first channel signal, wherein the first channel signal is any channel signal in the multichannel signal, and N is a positive integer greater than or equal to 1; and
identifying, according to the relative delay spectrum, whether a collected voice signal is a replay attack or not.

2. The method according to claim 1, wherein extracting the non-voice signal in the multichannel voice signal, to obtain the multichannel signal without the voice signal, comprises:

performing voice activation detection on a second channel voice signal, to detect a voice signal and a non-voice signal in the second channel voice signal, wherein a second channel signal is any channel voice signal in the multichannel voice signal; and
extracting the non-voice signal from the second channel voice signal; and extracting, according to a time period of the detected non-voice signal in the second channel voice signal, a signal part belonging to the time period from other channel voice signals rather than the second channel voice signal respectively, as the non-voice signal in the other channel voice signals.

3. The method according to claim 1 or 2, wherein according to the relative delay spectrum, identifying whether the collected voice signal is the replay attack or not, comprises:

while N=1, determining the maximum peak in the relative delay spectrum; and
while the maximum peak is greater than or equal to a preset threshold, identifying that the collected voice signal is the replay attack.

4. The method according to any one of claims 1-3, wherein according to the relative delay spectrum, identifying whether the collected voice signal is the replay attack or not, comprises:

while N>1, determining the maximum peak in each relative delay spectrum respectively, to obtain N maximum peaks; and
identifying, according to the N maximum peaks and the preset threshold, whether the collected voice signal is the replay attack or not.

5. The method according to claim 4, wherein according to the N maximum peaks and the preset threshold, identifying whether the collected voice signal is the replay attack or not, comprises one of the following:

> while the average value of the N maximum peaks is greater than or equal to the preset threshold, identifying that the collected voice signal is the replay attack;
> while the maximum value of the N maximum peaks is greater than or equal to the preset threshold, identifying that the collected voice signal is the replay attack; and
> while the number of maximum peaks greater than or equal to the preset threshold in the N maximum peaks meets a preset number, identifying that the collected voice signal is the replay attack.

6. A voice replay attack detection apparatus, comprising:

> an acquisition module, configured to acquire a multichannel voice signal collected by a microphone array;
> an extraction module, configured to extract a non-voice signal in the multichannel voice signal, to obtain a multichannel signal without a voice signal;
> a determination module, configured to determine, for N other channel signals except a first channel signal in the multichannel signal, a relative delay spectrum between the other channel signals and the first channel signal, wherein the first channel signal is any channel signal in the multichannel signal, and N is a positive integer greater than or equal to 1; and
> an identification module, configured to identify, according to the relative delay spectrum, whether a collected voice signal is a replay attack or not.

7. The apparatus according to claim 6, wherein the identification module comprises:

> a first identification submodule, configured to determine, while N=1, the maximum peak in the relative delay spectrum, and configured to identify, while the maximum peak is greater than or equal to a preset threshold, that the collected voice signal is the replay attack; and
> a second identification submodule, configured to determine, while N>1, the maximum peak in each relative delay spectrum, to obtain N maximum peaks, and configured to identify, according to the N maximum peaks and the preset threshold, whether the collected voice signal is the replay attack or not.

8. The apparatus according to claim 7, wherein the second identification submodule is configured to identify whether the collected voice signal is the replay attack or not in one of the following modes:

> while the average value of the N maximum peaks is greater than or equal to the preset threshold, identifying that the collected voice signal is the replay attack;
> while the maximum value of the N maximum peaks is greater than or equal to the preset threshold, identifying that the collected voice signal is the replay attack; and
> while the number of maximum peaks greater than or equal to the preset threshold in the N maximum peaks meets a preset number, identifying that the collected voice signal is the replay attack.

9. A computer-readable storage medium on which a computer program is stored, wherein when the program is executed by a processor, steps of the method in any one of claims 1-5 are implemented.

10. An electronic device, comprising:

> a memory, on which a computer program is stored; and
> a processor, configured to execute the computer program in the memory, to implement steps of the method in any one of claims 1-5.

11. A computer program product, comprising a computer program that, when executed by a processor, implements steps of the method in any one of claims 1-5.

Acquire a multichannel voice signal collected by a microphone array — S101

Extract a non-voice signal in the multichannel voice signal, to obtain a multichannel signal without a voice signal — S102

For N other channel signals except a first channel signal in the multichannel signal, determine a relative delay spectrum between the other channel signals and the first channel signal — S103

According to the relative delay spectrum, identify whether a collected voice signal is a replay attack or not — S104

FIG. 1

Real voice

(a)

(b)

Preset threshold

FIG. 2

Replay attack

(c)

(d)

Preset threshold

FIG. 3

Acquire a multichannel voice signal collected by a microphone array — S101

Perform voice activation detection on a second channel voice signal, to detect a voice signal and a non-voice signal in the second channel voice signal — S401

Extract the non-voice signal from the second channel voice signal — S402

S102

Extract, according to a time period of the detected non-voice signal in the second channel voice signal, a signal part belonging to the time period from other channel voice signals rather than the second channel voice signal respectively, as the non-voice signal in the other channel voice signals — S403

Determine, for N other channel signals except a first channel signal in the multichannel signal, a relative delay spectrum between the other channel signals and the first channel signal — S103

Identify, according to the relative delay spectrum, whether a collected voice signal is a replay attack or not — S104

FIG. 4

Acquire a multichannel voice signal collected by a microphone array ⟋ S101

Extract a non-voice signal in the multichannel voice signal, to obtain a multichannel signal without a voice signal ⟋ S102

Determine, for N other channel signals except a first channel signal in the multichannel signal, a relative delay spectrum between the other channel signals and the first channel signal ⟋ S103

Determine, while N=1, the maximum peak in the relative delay spectrum ⟋ S501

Identify, while the maximum peak is greater than or equal to a preset threshold, that the collected voice signal is the replay attack ⟋ S502

Determine, while N>1, the maximum peak in each relative delay spectrum respectively, to obtain N maximum peaks ⟋ S503

Identify, according to the N maximum peaks and the preset threshold, whether the collected voice signal is the replay attack or not ⟋ S504

FIG. 5

Acquisition module ⟋ 601

Extraction module ⟋ 602

Determination module ⟋ 603

Identification module ⟋ 604

FIG. 6

700

701

702

703

Memory

Processor

Multimedia
component

704

705

I/O interface

Communication
component

FIG. 7

1900

1950

Processor

Communication
component

1922

Power supply
component

1958

1932

Memory

Input/output
interface

1926

FIG. 8

## INTERNATIONAL SEARCH REPORT

| International application No. |
|---|
| **PCT/CN2021/117321** |

**A.    CLASSIFICATION OF SUBJECT MATTER**

G10L 17/00(2013.01)i;   G10L 25/03(2013.01)i;   G10L 25/51(2013.01)i;   H04L 29/06(2006.01)i

According to International Patent Classification (IPC) or to both national classification and IPC

**B.    FIELDS SEARCHED**

Minimum documentation searched (classification system followed by classification symbols)

G10L; H04L

Documentation searched other than minimum documentation to the extent that such documents are included in the fields searched

Electronic data base consulted during the international search (name of data base and, where practicable, search terms used)

CNABS; CNTXT; CNKI; SIPOABS; DWPI; USTXT; WOTXT; EPTXT; IEEE: 达闼机器人有限公司, 语音, 重放, 攻击, 延时谱, 通道, 非语音, 信号, voice, replay, attack+, non-voice, signal?, channel, delay spectrum, identif+

**C.    DOCUMENTS CONSIDERED TO BE RELEVANT**

| Category* | Citation of document, with indication, where appropriate, of the relevant passages | Relevant to claim No. |
|---|---|---|
| PX | CN 112151038 A (CLOUDMINDS ROBOT CO., LTD.) 29 December 2020 (2020-12-29) description, paragraphs [0005]-[0039] | 1-11 |
| A | CN 110415722 A (BEIJING D-EAR TECHNOLOGIES CO., LTD.) 05 November 2019 (2019-11-05) description, paragraphs [0005]-[0078] | 1-11 |
| A | CN 105702263 A (TSINGHUA UNIVERSITY et al.) 22 June 2016 (2016-06-22) entire document | 1-11 |
| A | CN 110211606 A (ZHEJIANG UNIVERSITY) 06 September 2019 (2019-09-06) entire document | 1-11 |
| A | CN 111194445 A (WOLFSON MICROELECTRONICS PLC) 22 May 2020 (2020-05-22) entire document | 1-11 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 November 2021** | **18 November 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**TRANSLATION**

## INTERNATIONAL SEARCH REPORT
### Information on patent family members

| International application No. |
| --- |
| **PCT/CN2021/117321** |

| Patent document cited in search report | | | Publication date (day/month/year) | Patent family member(s) | | | Publication date (day/month/year) |
| --- | --- | --- | --- | --- | --- | --- | --- |
| CN | 112151038 | A | 29 December 2020 | None | | | |
| CN | 110415722 | A | 05 November 2019 | None | | | |
| CN | 105702263 | A | 22 June 2016 | CN | 105702263 | B | 30 August 2019 |
| CN | 110211606 | A | 06 September 2019 | CN | 110211606 | B | 06 April 2021 |
| CN | 111194445 | A | 22 May 2020 | GB | 2581595 | A | 26 August 2020 |
| | | | | WO | 2019073234 | A1 | 18 April 2019 |
| | | | | KR | 20200066691 | A | 10 June 2020 |
| | | | | US | 2019147888 | A1 | 16 May 2019 |

Form PCT/ISA/210 (patent family annex) (January 2015)

**EP 3 996 087 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010949579